# EUROPÄISCHE PATENTANMELDUNG

(11) **EP 1 011 180 A1**
(43) Veröffentlichungstag der Anmeldung: **21.06.2000**
(21) Anmeldenummer: 98123748.0
(22) Anmeldetag: 14.12.1998
(51) Int. Cl.: H02G 3/04, G02B 6/44

(54) **Vorrichtung zur Aufnahme von langgestreckten biegsamen Gegenständen**

(71) Anmelder: KA-TE System AG, CH-8041 Zürich (CH); Hecht, Reinhard, 93047 Regensburg (DE); Manstorfer, Karl, 93047 Regensburg (DE)
(72) Erfinder: Tresch, Rudolf, CH-5703 Seon (CH)
(74) Vertreter: Patentanwälte Schaad, Balass, Menzl & Partner AG

(57) **Zusammenfassung**

Die Erfindung betrifft eine Vorrichtung zur Aufnahme von langgestreckten biegsamen Gegenständen, insbesondere zum Verlegen von elektrischen und/oder optischen Leitungen, vorzugsweise Lichtwellenleitern, mit wenigstens einem aus einer Vielzahl von einzelnen Kanalgliedern zusammengesetzten und mehrere Gelenkabschnitte (20) aufweisenden Aufnahmekanal, der in mehreren Konfigurationen zusammensetzbar ist, die sich jeweils durch die Relativorientierung der Drehachsen der Gelenkabschnitte (20) voneinander unterscheiden.

## Beschreibung

Die Erfindung betrifft eine Vorrichtung zur Aufnahme von langgestreckten biegsamen Gegenständen, insbesondere zum Verlegen von elektrischen und/oder optischen Leitungen, vorzugsweise Lichtwellenleitern, mit wenigstens einem aus einer Vielzahl von einzelnen Kanalgliedern zusammengesetzten Aufnahmekanal, der mehrere Gelenkabschnitte aufweist.

Derartige Vorrichtungen sind grundsätzlich bekannt und dienen beispielsweise an Werkzeugmaschinen zum Nachführen von elektrischen Versorgungsleitungen für bewegliche Teile der Maschine. Dabei liegt der Aufnahmekanal stets in einer einzigen Ebene, d.h. alle Drehachsen verlaufen parallel zueinander.

Aufgabe der Erfindung ist es, eine Aufnahmevorrichtung der eingangs genannten Art zu schaffen, die bei einfachem Aufbau möglichst vielseitig einsetzbar ist.

Die Lösung dieser Aufgabe erfolgt durch die Merkmale des Anspruchs 1 und insbesondere dadurch, dass der Aufnahmekanal in mehreren Konfigurationen zusammensetzbar ist, die sich jeweils durch die Relativorientierung der Drehachsen der Gelenkabschnitte voneinander unterscheiden.

Erfindungsgemäss kann durch entsprechendes Zusammensetzen der einzelnen Kanalglieder gezielt ein Aufnahmekanal realisiert werden, der sich entlang einer beliebig vorgegebenen Raumkurve erstreckt. Insbesondere können die Gelenkabschnitte derart orientiert werden, dass zumindest einige ihrer Drehachsen schräg oder senkrecht zueinander verlaufen. Auf diese Weise kann der Aufnahmekanal prinzipiell jede beliebige dreidimensionale Raumform annehmen.

Die bevorzugte Anwendung der Erfindung besteht in der Verlegung von Lichtwellenleitern in Rohranlagen, insbesondere Kanalisationsanlagen. In vorteilhafter Weise kann der gelenkige Aufnahmekanal dem Verlauf der Rohre insbesondere auch im Bereich der Schächte angepasst werden.

Gemäss einer bevorzugten Ausführungsform der Erfindung weist der Querschnitt des Aufnahmekanals die Form eines regelmässigen Vielecks, insbesondere eines Quadrats auf.

Hierdurch können aufeinanderfolgende Kanalglieder des Aufnahmekanals in einer bestimmten Anzahl von Relativorientierungen zusammengesetzt werden, die der Anzahl der Ecken des Kanalquerschnitts entspricht.

Gemäss einer weiteren bevorzugten Ausführungsform der Erfindung ist der Aufnahmekanal ausschliesslich aus vorzugsweise identischen Gelenkabschnitten zusammengesetzt.

Hierdurch wird ein kettenartiger und besonders flexibler Aufnahmekanal geschaffen.

Gemäss einem weiteren bevorzugten Ausführungsbeispiel der Erfindung umfassen die Gelenkabschnitte jeweils zwei etwa quaderförmige Kanalglieder, zwischen denen ein etwa zylinderförmiges Lagerelement angeordnet ist, an dem die Kanalglieder drehbar gelagert sind.

Das zylinderförmige Lagerelement dient hierbei als ein Scharnier, welches es ermöglicht, die Kanalglieder gegeneinander zu verdrehen.

Gemäss einem weiteren bevorzugten Ausführungsbeispiel der Erfindung weisen die Kanalglieder der Gelenkabschnitte jeweils wenigstens einen sich senkrecht zur Drehachse erstreckenden und in Richtung der Drehachse verjüngenden Wandabschnitt auf, der im Bereich seines freien Endes drehbar am Lagerelement gelagert ist.

Das Vorsehen eines derartigen sich verjüngenden Wandabschnitts ermöglicht es, die Kanalglieder gelenkig mit dem Lagerelement zu verbinden und gleichzeitig den Verdrehwinkei zu begrenzen.

Gemäss einer weiteren bevorzugten Ausführungsform der Erfindung sind zumindest einige Kanalglieder mehrteilig ausgeführt, wobei sie jeweils wenigstens ein Gehäuseteil sowie ein Deckelteil umfassen, die lösbar miteinander verbunden, insbesondere verrastet, sind.

Hierdurch wird auch bei zusammengesetztem und bereits montiertem Aufnahmekanal eine Zugangsmöglichkeit in das Innere des Aufnahmekanals geschaffen.

Gemäss einem weiteren bevorzugten Ausführungsbeispiel der Erfindung sind als Drehlager dienende Verbindungen zwischen den Kanalgliedern und dem Lagerelement zur Übertragung von in Richtung der Längsachse des Aufnahmekanals wirkenden Kräften ausgebildet.

Die Verbindungen zwischen den einzelnen Bauteilen des Aufnahmekanals dienen hierbei nicht nur als Drehlager, sondern gleichzeitig auch als die Zugfestigkeit des Aufnahmekanals erhöhende Verbindungsbereiche.

Gemäss einem weiteren bevorzugten Ausführungsbeispiel der Erfindung sind zumindest einige von unmittelbar aufeinanderfolgenden Kanalgliedern um die Längsachse des Aufnahmekanals gegeneinander verdrehbar.

Hierdurch wird eine Verwindung oder Torsion des Aufnahmekanals ermöglicht, wodurch ein weiterer Freiheitsgrad bei der Verformung des Aufnahmekanals geschaffen wird.

Gemäss einem weiteren bevorzugten Ausführungsbeispiel der Erfindung sind zumindest bei einigen von unmittelbar aufeinanderfolgenden Kanalgliedern jeweils in einander zugewandten Stirnseiten mehrere Verbindungsöffnungen ausgebildet, durch die Verbindungselemente, insbesondere Nieten, hindurchgeführt sind, wobei jeweils ein Kreisloch und ein Langloch einander gegenüberliegen.

Die Verbindungselemente halten die Kanalglieder axialfest zusammen und dienen gleichzeitig als Führungsorgane, die bei Torsion des Aufnahmekanals in dem jeweiligen Langloch geführt werden. Der maximale Verdrehwinkel ist durch die Länge des Langlochs bestimmt und kann somit bei dar Herstellung der Kanalglieder gezielt eingestellt werden.

Die Erfindung wird im folgenden beispielhaft unter Bezugnahme auf die beigefügte Zeichnung beschrieben. Es zeigen:
- Fig. 1: eine perspektivische Ansicht eines als Gelenkabschnitt ausgebildeten Grundmoduls des Aufnahmekanals gemäss einer Ausführungsform der Erfindung,
- Fig. 2a: eine Seitenschnittansicht eines Lagerelementes des Gelenkabschnitts von Fig. 1,
- Fig. 2b: eine Draufsicht auf das Lagerelement von Fig. 2a,
- Fig. 3a: ein Gehäuseteil des Gelenkabschnitts von Fig. 1 vor dem Verbiegen in seine endgültige Form,
- Fig. 3b - 3d: verschiedene Ansichten des seine endgültige Form aufweisenden Gehäuseteils von Fig. 3a,
- Fig. 4a: eine Ansicht entsprechend Fig. 3a eines ersten Deckelteils des Gelenkabschnitts von Fig. 1,
- Fig. 4b - 4d: den Fig. 3b - 3d entsprechende Ansichten des Deckelteils von Fig. 4a,
- Fig. 5a: eine Ansicht entsprechend Fig. 3a eines zweiten Deckelteils des Gelenkabschnitts von Fig. 1,
- Fig. 5b - 5d: den Fig. 3b - 3d entsprechende Ansichten des Deckelteils von Fig. 5a,
- Fig. 6: eine Ausführungsform eines Verbindungselementes, das zur Verbindung zweier gemäss Fig. 1 ausgebildeter Gelenkabschnitte dient,
- Fig. 7: eine perspektivische Teilansicht eines aus mehreren Gelenkabschnitten gemäss Fig. 1 zusammengesetzten und ein Anschlussstück aufweisenden Aufnahmekanals gemäss einer Ausführungsform der Erfindung,
- Fig. 8: eine andere perspektivische Ansicht des Aufnahmekanals von Fig. 7, und
- Fig. 9a - 9c: Beispiele für mögliche räumliche Anordnungen des erfindungsgemässen Aufnahmekanals jeweils in einer schematischen perspektivischen Ansicht.

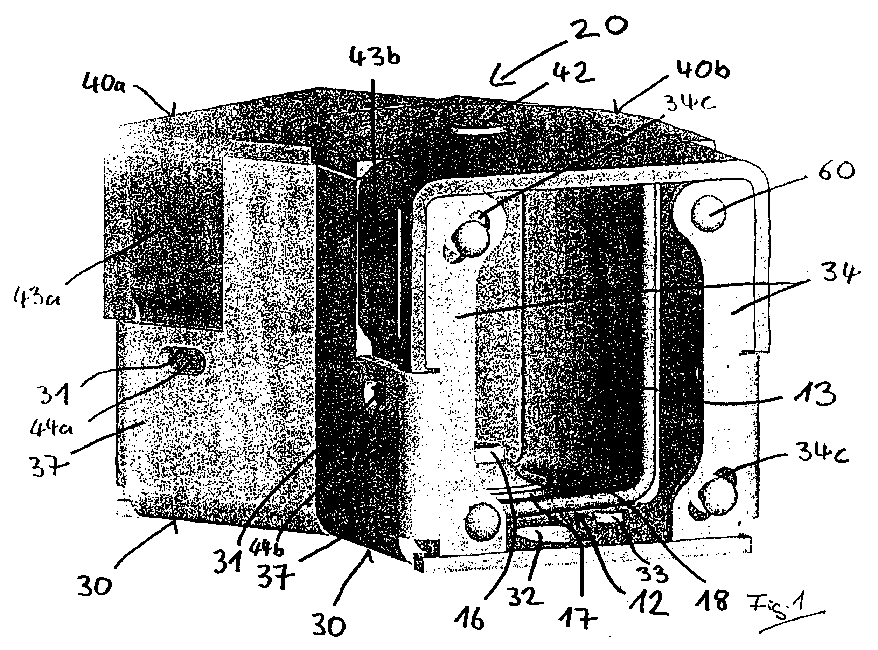

In Fig. 1 ist eine Ausführungsform eines Gelenkabschnitts 20 eines erfindungsgemässen Aufnahmekanals dargestellt. In der bevorzugten Ausführungsform der Erfindung ist der Aufnahmekanal - abgesehen von Anschluss- und Endstücken - ausschliesslich aus identischen Gelenkabschnitten 20 gemäss Fig. 1 zusammengesetzt, die somit auch als Grundmodule des Aufnahmekanals bezeichnet werden können.

Fig. 1 dient der ersten Erläuterung des grundsätzlichen Aufbaus des Gelenkabschnitts 20. Die einzelnen Bauteile des Gelenkabschnitts 20, die jeweils aus Blech hergestellte Formteile sind, werden an anderer Stelle näher beschrieben.

Der Gelenkabschnitt 20 umfasst zwei jeweils zweiteilige Kanalglieder, die jeweils ein zumindest näherungsweise die Form eines offenen Quaders aufweisendes Gehäuseteil 30 mit quadratischem Querschnitt und ein Deckelteil 40a bzw. 40b aufweisen. Die beiden Gehäuseteile 30 sind identisch ausgebildet und spiegelbildlich angeordnet.

Des weiteren ist ein zylinderförmiges Lagerelement 12 vorgesehen, über welches die beiden Kanalglieder scharnierartig miteinander verbunden sind. Der Zusammenhalt und die gelenkige Verbindung im Bereich des Lagerelementes 12 erfolgt u.a. dadurch, dass ein Drehzapfen 16 von aussen durch eine im Lagerelement 12 ausgebildete Aussparung hindurchgeführt und innen mittels eines bevorzugt als Federmutter ausgebildeten Sicherungselementes 18 unter Zwischenlage einer Unterlegscheibe 17 gesichert ist.

Darüber hinaus sind die beiden Kanalglieder über ihre Deckelteile 40a, 40b gelenkig miteinander verbunden. Ein in Fig. 1 nicht erkennbarer Arm des Deckelteils 40a ist mit einem kreisförmigen Vorsprung 42 versehen, der von innen durch eine entsprechende Öffnung im anderen Deckelteil 40b gesteckt ist und auf diese Weise als Drehlager dient.

Die Deckelteile 40a, 40b sind mit ihrem jeweiligen Gehäuseteil 30 lösbar verrastet, wobei als Rastmittel in den Seitenwandabschnitten 37 der Gehauseteile 30 ausgebildete ovale Rastöffnungen 31 sowie entsprechend geformte Rastvorsprünge 44a, 44b von Seitenarmen 43a bzw. 43b der Deckelteile 40a, 40b dienen.

Des weiteren sind in Fig. 1 bei einem Gehäuseteil 30 eine ovale Bodenöffnung 32 sowie einer von zwei nach innen vorstehenden zylindrischen Vorsprüngen 33 zu erkennen. Die Vorsprünge 33 dienen jeweils als Anschlag für das Lagerelement 12 und verhindern somit eine Drehung der Wandabschnitte 13 des Lagerelements 12 in den Aufnahmekanal hinein und gegen die darin befindlichen Gegenstände.

Die Gehäuseteile 30 weisen jeweils auf ihrer vom Lagerelement 12 abgewandten Stirnseite nach innen vorstehende Verbindungslaschen 34 auf, in denen jeweils ein (in Fig. 1 verdecktes) Kreisloch und ein Langloch 34c ausgebildet ist, wobei gleiche Löcher einander diagonal gegenüberliegen. Durch die jeweils in einem Eckbereich vorgesehenen Löcher sind im zusammengesetzten Zustand des Aufnahmekanals Verbindungselemente 60 in Form von Nieten hindurchgeführt, die in Fig. 1 lediglich schematisch angedeutet sind und zur axialfesten Verbindung zweier aufeinanderfolgender Gelenkabschnitte 20 dienen.

Die Seitenwand des zylinderförmigen Lagerelementes 12 ist entsprechend dem Querschnitt des Aufnahmekanals ausgeschnitten, so dass zur Seitenwand des Aufnahmekanals beitragende gekrümmte Wandabschnitte 13 des Lagerelementes 12 stehenbleiben.

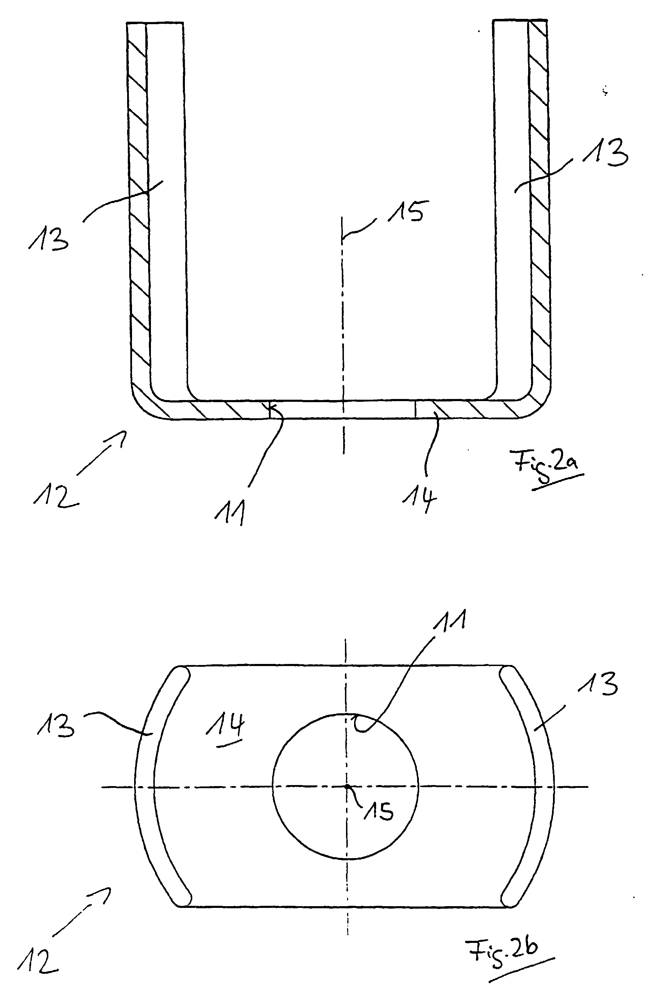

Die Fig. 2a und 2b zeigen das zylinderförmige Lagerelement 12. In Fig. 2b sind insbesondere die verbleibenden gekrümmten Wandabschnitte 13 zu erkennen, Im Bodenabschnitt 14 des Lagerelementes 12 ist die bereits erwähnte kreisförmige Aussparung 11 erkennbar, die zur Aufnahme des in Fig. 1 gezeigten Drehzapfens 16 dient und durch welche die mit der Mittelachse des Lagerelementes 12 zusammenfallende Drehachse 15 des Gelenkabschnitts verläuft.

Im mit den Gehäuseteilen 30 gelenkig verbundenen Zustand ragen die gekrümmten Wandabschnitte 13 des Lagerelementes 12 in Abhängigkeit von dem Verdrehwinkel lediglich so weit in das Innere des Aufnahmekanals hinein, dass die vorstehenden Bereiche entweder im Schatten der Verbindungslaschen 34 liegen (vgl. Fig. 1) oder die von den Verbindungslaschen 34 festgelegte freie innere Querschnittsfläche des Aufnahmekanals nur unwesentlich verringert wird.

Die Fig. 3a bis 3d zeigen eines der beiden identischen Gehäuseteile 30 des Gelenkabschnitts 20. In Fig. 3a ist das Gehäuseteil 30 vor dem Zurechtbiegen dargestellt, wobei die Biegekanten jeweils durch unterbrochene Linien B angedeutet sind. Das Gehäuseteil 30 weist einen Bodenabschnitt 36, zwei Seitenwandabschnitte 37 sowie die bereits erwähnten Verbindungslaschen 34 auf, in denen jeweils ein Langloch 34c und ein Kreisloch 34b ausgebildet ist. Rechteckige Ausschnitte 37a in den Seitenwandabschnitten 37 sind im zusammengesetzten Zustand durch die Seitenarme 43a, 43b der Deckelteile 40a bzw. 40b verschlossen (vgl. Fig. 1) und werden auf einer Seite durch freie Endabschnitte 34a der Verbindungslaschen 34 begrenzt.

Des weiteren sind in Fig. 3a die ovale Bodenöffnung 32 und die beiden Bodenvorsprünge 33 zu erkennen. Anstelle der Bodenöffnung 32 kann auch eine im Bedarfsfall herausbrechbare und z.B. durch Sollbruchstellen bzw. eine Perforation definierte Lasche vorgesehen sein.

Auf seiner im zusammengesetzten Zustand dem Lagerelement 12 zugewandten Seite ist der Bodenabschnitt 36 mit einem vorstehenden und sich in Richtung der durch das Lagerelement 12 definierten Drehachse 15 symmetrisch verjüngenden Abschnitt 35 versehen, der schräg zur durch eine unterbrochene Linie angedeuteten Längsachse 22 des Aufnahmekanals verlaufende Kanten 35c und an seinem freien Ende einen teilkreisförmigen Ausschnitt 35a umfasst. Ein den Ausschnitt 35a umgebender Kreisringabschnitt 35b steht in Richtung des Kanalinneren vor.

Der Kreisringabschnitt 35b wird ebenso wie die beiden Vorsprünge 33 des Bodenabschnitts 36 durch Materialverformung und insbesondere durch Prägen oder Drücken ausgebildet.

Während der teilkreisförmige Ausschnitt 35a zur Aufnahme des Drehzapfens 16 (vgl. Fig. 1) dient, ist der Kreisringabschnitt 35b im zusammengesetzten Zustand in der kreisförmigen Aussparung 11 des Lagerelementes 12 angeordnet, so dass das Gehäuseteil 30 mit seinem Kreisringabschnitt 35b das Lagerelement 12 hintergreift und auf diese Weise nicht nur für eine drehbare Lagerung sorgt, sondern gleichzeitig eine axialfeste und zur Aufnahme von Zugkräften dienende Verbindung zwischen dem jeweiligen Gehäuseteil 30 und dem Lagerelement 12 schafft. Durch diese kraft- und formschlüssige Verbindung können in Richtung der Längsachse 22 des Aufnahmekanals wirkende Kräfte übertragen werden.

Die im zusammengesetzten Zustand dem Lagerelement 12 zugewandten Stirnseiten der Gehäuseteile 30, d.h. jeweils die senkrecht zur Längsachse 22 des Aufnahmekanals und parallel zur Drehachse 15 des Gelenkabschnitts 20 verlaufenden Kanten 37c der Seitenwandabschnitte 37 sowie die schräg zur Längsachse 22 des Aufnahmekanals verlaufenden Kanten 35c des sich verjüngenden Abschnitts 35 des Bodenabschnitts 36, dienen als zusammenwirkende Drehbegrenzungsanschläge.

In dem Zustand von Fig. 1 sind die beiden Gehäuseteile 30 in einer Richtung maximal gegeneinander verdreht, wobei deren vorstehend erwähnten Stirnseiten 37c, 35c auf der entsprechenden Seite aneinanderstossen. Durch den Winkel, den die schrägen Kanten 35c mit der Längsachse 22 des Aufnahmekanals einschliessen, kann somit der maximale Verdrehwinkel des Gelenkabschnitts 20 und folglich der minimale Krümmungsradius des Aufnahmekanals im Bereich dieses Gelenkabschnitts eingestellt werden.

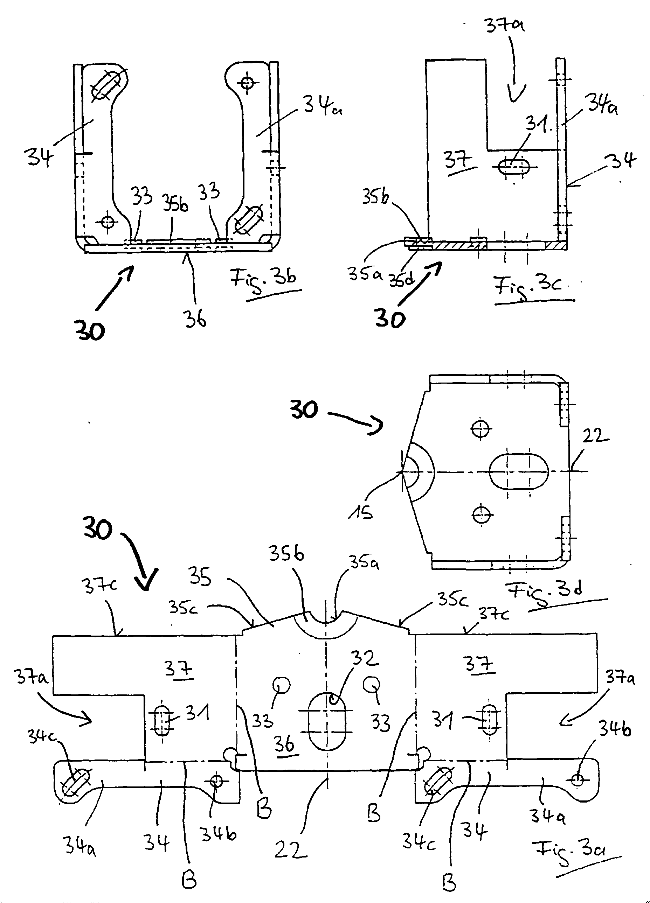

In Fig. 3b sind insbesondere die nach innen ragenden Verbindungslaschen 34 sowie die nach innen vorstehenden Bereiche des Bodenabschnitts 36, nämlich die beiden Vorsprünge 33 sowie der Kreisringabschnitt 35b, zu erkennen. In der Vertiefung 35d unter dem Kreisringabschnitt 35b kann ein zylindrischer Abschnitt des Drehzapfens 16 angeordnet werden.

Aus Fig. 3c geht insbesondere die Ausbildung der Seitenwandabschnitte 37 hervor, die jeweils mit dem Ausschnitt 37a und der Rastöffnung 31 versehen sind. Ausserdem ist der sich verjüngende Abschnitt 35 des Bodenabschnitts 36 mit dem teilkreisförmigen Ausschnitt 35a und dem Kreisringabschnitt 35b zu erkennen. Des weiteren ist erkennbar, dass der Ausschnitt 37a auf der vom sich verjüngenden Abschnitt 35 wegweisenden Seite von der jeweiligen Verbindungslasche 34 begrenzt wird.

Ebenso wie aus Fig. 3b ist auch aus Fig. 3d insbesondere zu erkennen, dass im Bereich der Verbindungslaschen 34 die freie innere Querschnittsfläche des Aufnahmekanals reduziert ist.

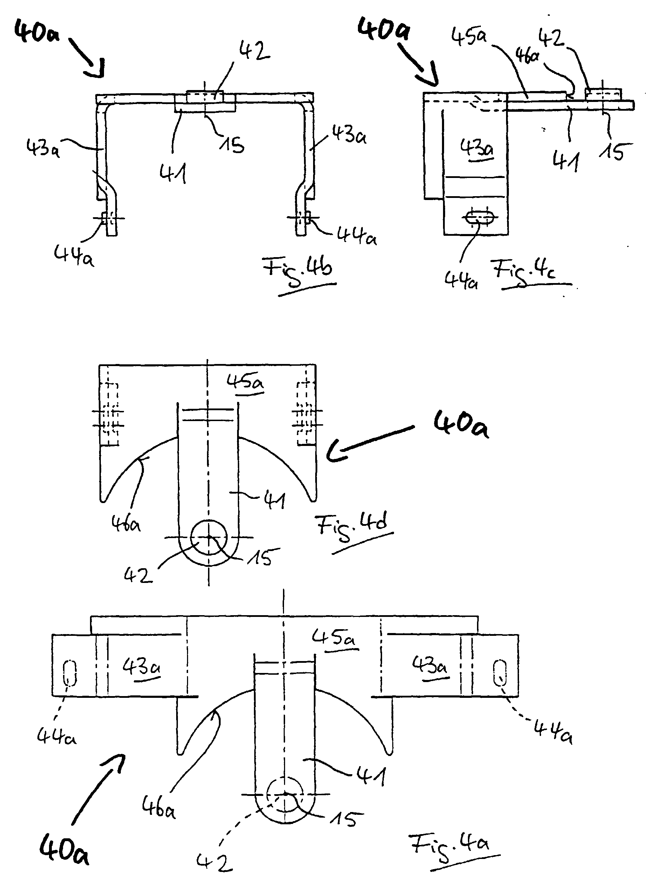

Die Fig. 4a - 4d zeigen das Deckelteil 40a (vgl. Fig. 1), wobei das Deckelteil 40a in Fig. 4a im noch nicht in seine endgültige Form gebogenen Zustand dargestellt ist. Die Biegekanten B sind durch unterbrochene Linien angedeutet.

In Fig. 4a ist der nach Art einer zungenförmigen Lasche ausgebildete Arm 41 zu erkennen, der sich im zusammengesetzten Zustand des Aufnahmekanals in Richtung des anderen Deckelteils 40b erstreckt. Der Arm 41 ist bezüglich eines Deckelabschnitts 45a parallel nach innen versetzt, wie insbesondere aus Fig. 4c hervorgeht. Im Bereich des freien Endes des Armes 41 ist der bereits in Verbindung mit Fig. 1 erwähnte, nach aussen abstehende Vorsprung 42 ausgebildet. Ebenso wie die nach aussen vorstehenden ovalen Rastvorsprünge 44a, die an den Seitenarmen 43a des Deckelteils 40a ausgebildet sind und zum Verrasten mit dem Gehäuseteil 30 dienen, ist der Vorsprung 42 des Armes durch Materialverformung insbesondere in einem Präge- oder Drückverfahren hergestellt.

Die ovalen Rastvorsprünge 44a sind an nach innen versetzten Endabschnitten der Seitenarme 43a ausgebildet, so dass die zwischen den Endabschnitten und dem Deckelabschnitt 45a liegenden Bereiche der Seitenarme 43 bündig mit dem jeweiligen Seitenwandabschnitt 37 des Gehauseteils 30 abschliessen und ein zumindest im wesentlichen glatter Seitenwandbereich des Aufnahmekanals vorhanden ist. Diese Ausgestaltung der Seitenarme 43a des Deckelteils 40a geht insbesondere aus Fig. 4b hervor.

Wie Fig. 4a und Fig. 4d zeigen, ist der Deckelabschnitt 45a auf seiner im zusammengesetzten Zustand dem anderen Deckelteil 40b (vgl. Fig. 1) zugewandten Seite mit einem teilkreisförmigen Ausschnitt 46a versehen, der zur Aufnahme eines komplementär geformten teilkreisformigen Abschnitts 46b des anderen Deckelteils 40b dient, der nachstehend näher erläutert wird.

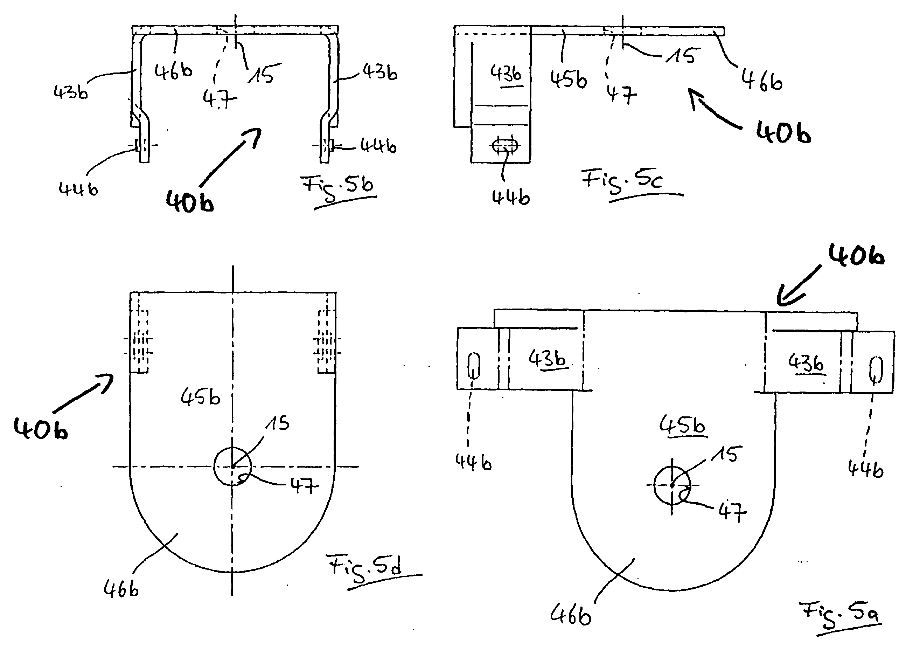

Das in den Fig. 5a bis 5d gezeigte Deckelteil 40b unterscheidet sich von dem vorstehend beschriebenen Deckelteil 40a im wesentlichen durch die Ausgestaltung des Deckelabschnitts 45b, der durchgehend in einer Ebene liegt und im zusammengesetzten Zustand das jeweilige Gehäuseteil 30 und - mit seinem teilkreisförmigen Abschnitt 46b - das zylinderförmige Lagerelement 12 verschliesst.

Des weiteren erstreckt sich im zusammengesetzten Zustand der Deckelabschnitt 45b über den Arm 41 des anderen Deckelteile 40a hinweg, wobei der Vorsprung 42 des Armes 41 in der Öffnung 47 des Deckelabschnitts 45b steckt. Der Vorsprung 42 dient somit als Drehzapfen, an dem das Deckelteil 40b drehbar gelagert ist, wobei sich beim Verdrehen der beiden Deckelteile 40a und 40b der teilkreisförmige Abschnitt 46b in dem dazu komplementär geformten Ausschnitt 46a des Deckelabschnitts 40a dreht.

Auf diese Weise wird eine optimale gelenkige Verbindung und gleichzeitig eine geschlossene rechteckige Deckelfläche geschaffen.

Das Zusammensetzen zweier Gehäuseteile 30 zu einem Gelenkabschnitt 20 kann mit aufgesetzten Deckelteilen 40a, 40b erfolgen, wobei das Deckelteil 40b über das Deckelteil 40a geschoben wird, bis der Vorsprung 42 in die Öffnung 47 einschnappt.

Die Drehachse 15 des Gelenkabschnitts 20 verläuft durch die Längsachse des die Gehäuseteile 30 und das Lagerelement 12 zusammenhaltenden Drehzapfens 16 sowie des Vorsprung 42 des Armes 41 des Deckelteils 40a. Die beiden Gehäuseteile 30 des Gelenkabschnitts 20 sind somit an zwei voneinander unabhängigen Stellen gelenkig miteinander verbunden, und zwar zum einen über das Lagerelement 12 und zum anderen über ihre Deckelteile 40a, 40b, wobei diese Gelenke jeweils gleichzeitig als in Längsrichtung des Aufnahmekanals wirkende Kräfte übertragende, die Stabilität des Aufnahmekanals erhöhende Verriegelungen dienen.

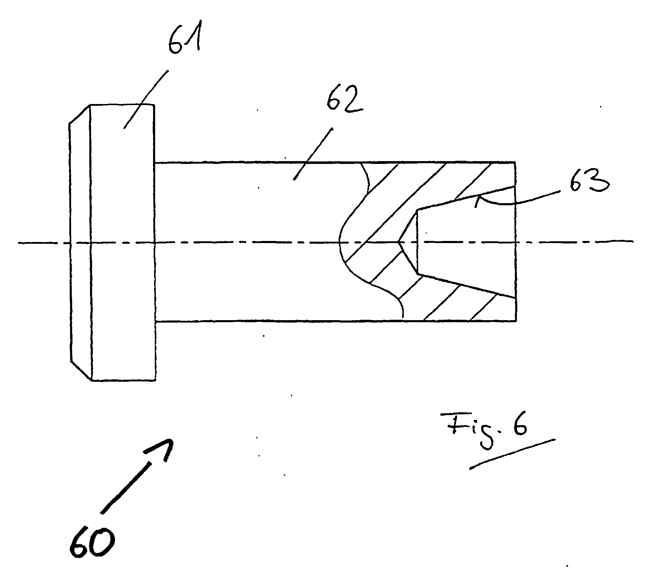

In Fig. 6 ist eine Ausführungsform eines Verbindungselementes 60 in Form eines Niets dargestellt, der - wie bereits bei Fig. 1 erwähnt - zum Verbinden zweier aufeinanderfolgender Gelenkabschnitte 20 verwendet wird. Das Verbindungselement 60 weist einen Kopf 61 und einem Schaft 62 auf, wobei der freie Endbereich des Schafts 62 mit einer sich in Richtung des Kopfs 61 verjüngenden konusförmigen Ausnehmung 63 versehen ist.

Zum Verbinden zweier Gelenkabschnitte 20 wird das hohle freie Ende des Schafts 62 mit Hilfe eines Werkzeugs derart umgeformt, dass die stirnseitig aneinanderliegenden Verbindungslaschen 34 der Gehäuseteile 30 zwischen dem Kopf 61 und dem umgeformten Schaftende eingeklemmt werden. Die Klemmkraft ist derart bemessen, dass die Gelenkabschnitte 20 gegeneinander verdreht werden können und zwischen den beiden Gelenkabschnitten 20 eine gute galvanische Verbindung besteht.

Durch diese Vernietung aufeinanderfolgender Gelenkabschnitte 20 ist sichergestellt, dass sich der gesamte Aufnahmekanal auf dem gleichen elektrischen Potential befindet.

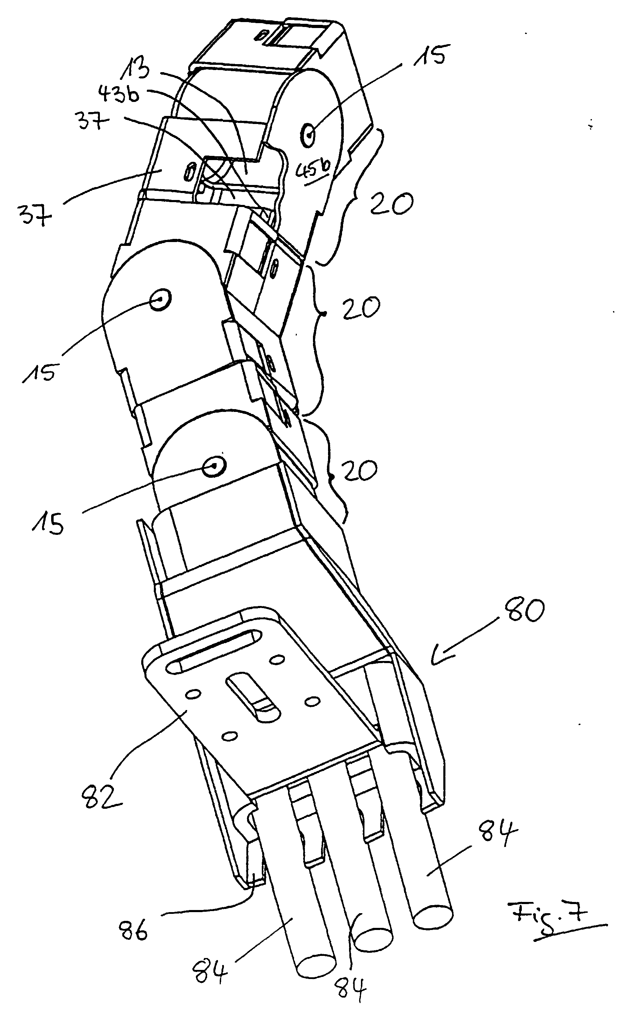

In Fig. 7 ist ein aus im wesentlichen identischen Gelenkabschnitten 20, von denen drei gezeigt sind, zusammengesetzter erfindungsgemässer Aufnahmekanal dargestellt, der an seinem einen Ende mit einem Anschlussstück 80 versehen ist, das einen sich senkrecht zur Längsachse des Aufnahmekanals erstreckenden Befestigungsanker 82 aufweist. In dem Anschlussstück 80 sind mehrere, in der dargestellten Ausführungsform drei, bevorzugt aus Stahl hergestellte Führungsrohre 84 angeordnet. Über die Führungsrohre 84, die im Anschlussstück 80 oder im ersten Gelenkabschnitt 20 enden, werden die aufzunehmenden Gegenstände, beispielsweise Lichtwellenleiter, dem Aufnahmekanal zugeführt. Mittels eines eingangsseitig angeordneten, gabelartigen Halteabschnitts 86 erfolgt eine definierte Führung der Führungsrohre 84 im Anschlussstück 80 und somit der Lichtwellenleiter in den Aufnahmekanal hinein. Am Befestigungsanker 82 können die Führungsrohre 84 beispielsweise mittels Klemmen befestigt werden. Es können auch andere Anschlussstücke eingesetzt werden, die z.B. insgesamt neun in drei Dreierreihen angeordnete Führungsrohre aufweisen, um dem Aufnahmekanal neun biegsame Gegenstände wie beispielsweise Lichtwellenleiter zuzuführen.

In der in Fig. 7 dargestellten Konfiguration sind die beiden ersten sich an das Anschlussstück 80 anschliessenden Gelenkabschnitte 20 mit ihren Drehachsen 15 im wesentlichen parallel zueinander angeordnet, wie an den im wesentlichen in die gleiche Richtung weisenden Deckeln 40a, 40b zu erkennen ist. Die beiden ersten Gelenkabschnitte 20 sind dabei geringfügig um die Längsachse des Aufnahmekanals gegeneinander verdreht.

Während bei dem sich unmittelbar an das Anschlussstück 80 anschliessenden ersten Gelenkabschnitt 20 die beiden jeweils von einem Gehäuseteil 30 und einem Deckelteil 40a bzw. 40b gebildeten Kanalglieder nicht um die Drehachse 15 gegeneinander verdreht sind und somit auf einer Geraden liegen, ist der Aufnahmekanal am nächsten Gelenkabschnitt 20 um den maximalen Verdrehwinkel abgeknickt.

Der in der Darstellung von Fig. 7 dritte und letzte Gelenkabschnitt 20 ist bezüglich der beiden ersten Gelenkabschnitte 20 um 90° verdreht angeordnet, d.h. die Drehachse 15 des dritten Gelenkabschnitts 20 verläuft im wesentlichen senkrecht zu den Drehachsen 15 der anderen beiden Gelenkabschnitte 20. Auf diese Weise kann durch Abwinkeln des dritten Gelenkabschnitts 20, wie es Fig. 7 zeigt, eine Richtungsänderung des Aufnahmekanals aus der durch die beiden ersten Gelenkabschnitte 20 festgelegten Ebene heraus erfolgen.

Die in den Verbindungslaschen 34 der Gehäuseteile 30 ausgebildeten Langlöcher 34c (vgl. z.B. Fig. 1 und Fig. 3b) sind in der bevorzugten Ausführungsform der Erfindung derart bemessen, dass der maximale Verdrehwinkel zweier aufeinanderfolgender Gelenkabschnitte 20 um die Längsachse des Aufnahmekanals im Bereich von etwa 5° liegt. Des weiteren sind die sieh verjüngenden Abschnitte 35 der Bodenabschnitte 36 der Gehäuseteile 30 (vgl. z.B. Fig. 3 a und Fig. 3d), d.h. der Winkel zwischen den Schrägkanten 35c und der Längsachse 22 des Aufnahmekanals, bevorzugt derart ausgeführt, dass der maximale Verdrehwinkel der Gelenkabschnitte 20 jeweils einem minimalen Krümmungsradius des Aufnahmekanals von etwa 100 mm entspricht. Eine stärkere Krümmung der im Aufnahmekanal aufzunehmenden biegsamen Gegenstände wird auf diese Weise vermieden, was insbesondere im Fall der Verlegung von Lichtwellenleitern wichtig ist.

Bei dem in Fig. 7 dritten und letzten Gelenkabschnitt 20 ist der Deckelabschnitt 45b des Deckelteils 40b teilweise weggebrochen dargestellt, um das Innere des Aufnahmekanals zu zeigen, wobei ein Teil eines Seitenarmes 43b, der mit einem in Fig. 7 nach unten weisenden Seitenwandabschnitt 37 des entsprechenden Gehäuseteils 30 verrastet ist, sowie ein Wandabschnitt 13 des Lagerelementes zu erkennen sind.

Des weiteren geht aus Fig. 7 hervor, dass der nach oben weisende Seitenwandabschnitt 37 des dritten und letzten Gelenkabschnitts 20 lediglich mit einer verkürzten Verbindungslasche versehen ist, bei welcher der den Ausschnitt 37a begrenzende freie Endabschnitt 34a fehlt. Der freie Endabschnitt 34a kann bei der Montage des Aufnahmekanals vor Ort einfach mittels eines geeigneten Werkzeugs, beispielsweise einer Blechschere oder einer Trennscheibe, abgetrennt werden. Die verbleibenden drei Verbindungselemente 60 zur Verbindung der stirnseitig aneinanderstossenden Gehäuseteile 30 sind zur Gewährleistung einer sicheren Verbindung ausreichend.

Der Zweck der verkürzten Verbindungslasche 34 besteht darin, trotz der 90°-Verdrehung zwischen dem zweiten und dritten Gelenkabschnitt 20 bei abgenommenen Deckelteilen 40a, 40b einen ungestörten Zugriff in das Innere des Aufnahmekanals hinein zu gestatten, um beispielsweise weitere Lichtwellenleiter einzubringen.

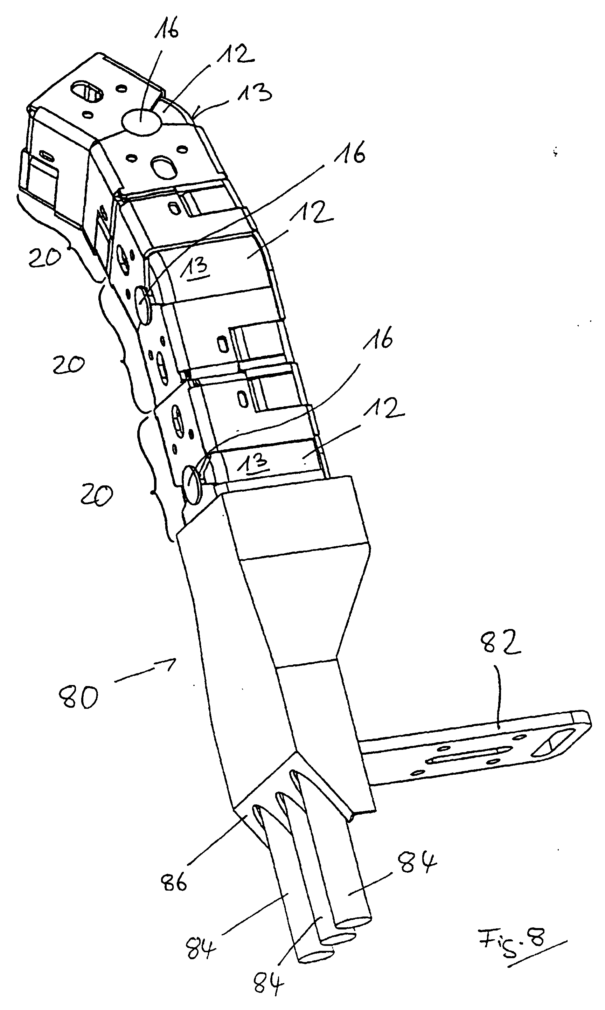

Fig. 8 zeigt eine andere perspektivische Ansicht der erfindungsgemässen Aufnahmevorrichtung von Fig. 7, in welcher insbesondere die Bodenabachnitte 36 der Gehäuseteile 30 sowie die die Gehäuseteile 30 und das Lagerelement 12 zusammenhaltenden Drehzapfen 16 zu erkennen sind. Ausserdem geht aus Fig. 8 hervor, dass die Breite der verbleibenden Wandabschnitte 13 des Lagerelementes 12 in Abhängigkeit von der Ausgestaltung der sich verjüngenden Abschnitte 35 derart gewahlt ist, dass auch bei maximaler Abwinkelung der Gelenkabachnitte 20 der Aufnahmekanal jeweils zwischen den auseinanderklaffenden Seiten der Gehäuseteile 30 durch den Wandabschnitt 13 des Lagerelementes 12 geschlossen ist.

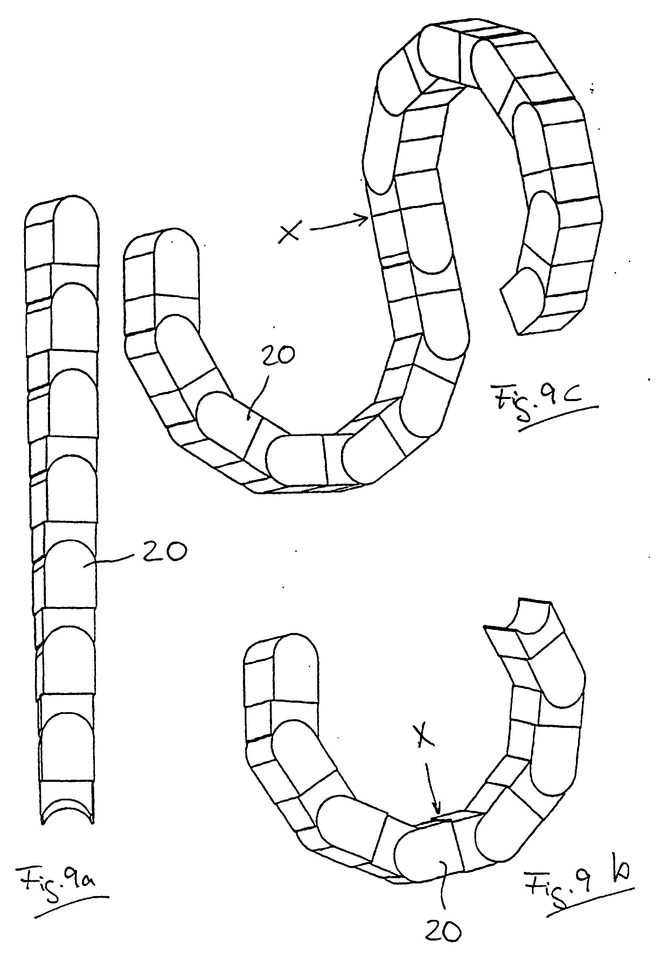

In den Fig. 9a - 9c sind beispielhaft verschiedene Konfigurationen eines jeweils lediglich schematisch dargestellten Aufnahmekanals dargestellt, die erfindungsgemäss verwirklicht werden können.

In Fig. 9a ist eine Anordnung eindimensionaler Art dargestellt, bei der jeweils zwei aufeinanderfolgende Gelenkabschnitte 20 um die Längsachse des Aufnahmekanals gegeneinander verdreht sind und wobei der Aufnahmekanal im Bereich der Drehachsen der Gelenkabschnitte 20 nicht abgewinkelt ist. Auf diese Weise kann eine Verwindung oder Torsion des Aufnahmekanals realisiert werden.

Gemäss Fig. 9b weist der Aufnahmekanal zwei an der durch einen Pfeil X angezeigten Stelle miteinander verbundene Abschnitte auf, die jeweils in einer einzigen Ebene liegen, d.h. die Drehachsen der Gelenkabschnitte 20 eines Abschnitts verlaufen alle parallel zueinander. Die an der Stelle X miteinander verbundenen Gelenkabschnitte 20 sind um die Längsachse des Aufnahmekanals gegeneinander verdreht. Der Aufnahmekanal weist somit gewissermassen abschnittsweise eine zweidimensionale Struktur auf. Ohne Verdrehung aufeinanderfolgender Gelenkabschnitte um die Kanal-Längsachse kann auch eine durchgehend in einer Ebene liegende, zweidimensionale Struktur realisiert werden.

In Fig. 9c sind an einer durch einen Pfeil X angezeigten Stelle zwei aufeinanderfolgende Gelenkabschnitte 20 um 90° verdreht angeordnet, wobei einer der Gelenkabschnitte 20 abgeknickt ist. Auf diese Weise entsteht eine dreidimensionale Struktur.

Die Beispiele der Fig. 9a, 9b und 9c zeigen, dass die Erfindung es ermöglicht, den Aufnahmekanal sich entlang einer grundsätzlich beliebig vorgegebenen Raumkurve erstrecken zu lassen.

Die bevorzugte Anwendung der Erfindung besteht in der Verlegung von Lichtwellenleitern in Rohren, insbesondere im Bereich von Schächten, Rohreinmündungen in Schächte und Kanalisationsanlagen. Dabei dient der Befestigungsanker 82 des Anschlussstücks 80 (vgl. Fig. 7 und Fig. 8) zur Befestigung des Aufnahmekanals an der Innenwand eines senkrecht zu einem Kanalisationsrohr verlaufenden und z.B. zur Oberfläche führenden Schachtes. Die Befestigung des Aufnahmekanals an der Schachtinnenwand erfolgt über die Bodenabschnitte 36 der Gehäuseteile 30, und zwar beispielsweise mit Hilfe von Schrauben. Hierzu dienen die ovalen Bodenöffnungen 32. Die Befestigung an der Innenwand kann z.B. mit Hilfe von beispielsweise nach Art eines Trägers gebogenen Stützblechen erfolgen, die einerseits an der Innenwand verankert und andererseits mit den Bodenabschnitten 36 des Aufnahmekanals verschraubt werden. Der Raum zwischen der Innenwand und dem Aufnahmekanal kann dann unter Einschliessung der Stützbleche mit einem geeigneten Material ausgegossen werden. Es ist aber auch möglich, den Aufnahmekanal direkt über die Bodenabschnitte 36 der Gehäuseteile 30 an der Schachtinnenwand zu befestigen.

Falls die Gehäuseteile 30 mit herausbrechbaren Bodenlaschen hergestellt werden, können nicht zur Befestigung dienende Bodenabschnitte 36 des Aufnahmekanals geschlossen bleiben, um das Innere des Aufnahmekanals und insbesondere die darin befindlichen Lichtwellenleiter vor äusseren Einflüssen zu schützen.

## Patentansprüche

1. Vorrichtung zur Aufnahme von langgestreckten biegsamen Gegenständen, insbesondere zum Verlegen von elektrischen und/oder optischen Leitungen, vorzugsweise Lichtwellenleitern, mit wenigstens einem aus einer Vielzahl von einzelnen Kanalgliedern zusammengesetzten und mehrere Gelenkabschnitte (20) aufweisenden Aufnahmekanal, der in mehreren Konfigurationen zusammensetzbar ist, die sich jeweils durch die Relativorientierung der Drehachsen (15) der Gelenkabschnitte (20) voneinander unterscheiden.

2. Vorrichtung nach Anspruch 1,
dadurch **gekennzeichnet,**
dass der Querschnitt des Aufnahmekanals die Form eines regelmässigen Vielecks, insbesondere eines Quadrats, aufweist.

3. Vorrichtung nach Anspruch 1 oder 2,
dadurch **gekennzeichnet,**
dass der Aufnahmekanal ausschliesslich aus vorzugsweise identischen Gelenkabschnitten (20) zusammengesetzt ist.

4. Vorrichtung nach einem der Ansprüche 1 bis 3,
dadurch **gekennzeichnet,**
dass die Gelenkabschnitte (20) jeweils wenigstens zwei bevorzugt identische Kanalglieder umfassen, die gelenkig miteinander verbunden sind.

5. Vorrichtung nach einem der Ansprüche 1 bis 4,
dadurch **gekennzeichnet,**
dass die Gelenkabschnitte (20) jeweils zwei etwa quaderförmige Kanalglieder umfassen, zwischen denen ein etwa zylinderförmiges Lagerelement (12) angeordnet ist, an dem die Kanalglieder drehbar gelagert sind, wobei bevorzugt die Kanalglieder jeweils wenigstens einen senkrecht zur Drehachse (15) verlaufenden und sich in Richtung der Drehachse (15) verjüngenden vorstehenden Wandabschnitt (35) aufweisen, der im Bereich seines freien Endes drehbar am Lagerelement (12) gelagert ist.

6. Vorrichtung nach Anspruch 4 oder 5
dadurch **gekennzeichnet,**
dass zur Einhaltung eines vorbestimmten minimalen Krümmungsradius des Aufnahmekanals die Kanten (35c, 37c) von einander zugewandten Stirnseiten der Kanalglieder der Gelenkabschnitte (20) jeweils als Drehbegrenzungsanschläge ausgebildet sind.

7. Vorrichtung nach einem der Ansprüche 1 bis 6,
dadurch **gekennzeichnet,**
dass zumindest einige Kanalglieder mehrteilig ausgeführt sind und jeweils wenigstens ein Gehäuseteil (30) sowie ein Deckelteil (40a, 40b) umfassen, wobei bevorzugt das Gehäuseteil (30) und das Deckelteil (40a, 40b) lösbar miteinander verbunden, insbesondere verrastet sind, wobei bevorzugt die Kanalglieder der Gelenkabschnitte (20) jeweils mit ihrem Gehäuseteil (30) am Lagerelement (12) drehbar gelagert sind.

8. Vorrichtung nach Anspruch 7,
dadurch **gekennzeichnet,**
dass die Deckelteile (40a, 40b) der Kanalglieder gelenkig miteinander verbunden sind.

9. Vorrichtung nach einem der Ansprüche 1 bis 8,
dadurch **gekennzeichnet,**
dass bevorzugt als Drehgelenk dienende Verbindungen zwischen den Kanalgliedern und dem Lagerelement (12), bevorzugt zwischen Gehäuseteilen (30) der Kanalglieder und dem Lagerelement (12) und/oder zwischen Deckelteilen (40a, 40b) der Kanalglieder untereinander, zur Übertragung von in Richtung der Längsachse (22) des Aufnahmekanals wirkenden Kräften ausgebildet sind.

10. Vorrichtung nach einem der Ansprüche 1 bis 9,
dadurch **gekennzeichnet,**
dass zumindest einige von unmittelbar aufeinanderfolgenden Kanalgliedern um die Längsachse (22) des Aufnahmekanals gegeneinander verdrehbar sind, wobei vorzugsweise in einander zugewandten Stirnseiten der Kanalglieder jeweils mehrere Verbindungsöffnungen (34b, 34c) ausgebildet sind, durch die Verbindungselemente (60), insbesondere Nieten, hindurchgeführt sind, und wobei bevorzugt jeweils ein Kreisloch (34b) und ein Langloch (34c) einander gegenüberliegen.
